# DEMANDE DE BREVET EUROPEEN

(11) **EP 0 982 817 A1**
(43) Date de publication de la demande: **01.03.2000**
(21) Numéro de dépôt: 99401809.1
(22) Date de dépôt: 19.07.1999
(51) Int. Cl.: H01S 3/067, G02B 6/16

(54) **Fibre optique à usage d'amplificateur optique avec une gaine dopée au fluor**

(30) Priorité: 27.08.1998 FR 9810760
(71) Demandeur: ALCATEL, 75008 Paris (FR)
(72) Inventeur: Gasca, Laurent, 91400 Orsay (FR); Le Sergent, Christian, 91460 Marcoussis (FR); Sinet, Christophe, 92260 Fontenay aux Roses (FR)
(74) Mandataire: Lamoureux, Bernard

(57) **Abrégé**

Une fibre optique à usage d'amplificateur optique, comprend un coeur entouré par une gaine, le coeur et la gaine étant constitués d'un matériau à base de silice et l'indice de réfraction de la gaine étant inférieur à celui du coeur. Le matériau constituant la gaine est dopé avec du Fluor de telle manière que l'écart entre l'indice de réfraction du matériau constituant la gaine et l'indice de réfraction de la silice pure est compris entre -0,003 et -0,010 ce qui contribue à augmenter le rendement d'amplification.

## Description

L'invention se rapporte à une fibre optique à usage d'amplificateur optique, comprenant un coeur entouré par une gaine, le coeur et la gaine étant constitués d'un matériau à base de silice et l'indice de réfraction de la gaine étant inférieur à celui du coeur.

Une telle fibre est utilisée tout particulièrement dans les systèmes de transmission en multiplexage de longueur d'onde comme les systèmes sous-marin de télécommunication.

Le matériau à base de silice constituant le coeur d'une telle fibre contient de l'Erbium comme dopant sous forme d'ions Er³⁺, ces ions étant excités par un signal de pompage fournissant l'énergie nécessaire à l'amplification.

L'efficacité du pompage dépend de l'écart entre les indices de réfraction du coeur et de la gaine. En augmentant l'écart entre ces deux indices de réfraction, on augmente la densité de puissance optique dans le coeur de la fibre et donc d'autant le rendement d'amplification.

Il est connu que la présence d'Aluminium dans le matériau constituant le coeur de la fibre optique contribue d'une part à augmenter l'indice de réfraction du coeur de la fibre et donc l'efficacité du pompage, et d'autre part, à augmenter la largeur utile du spectre de gain de l'Erbium.

Toutefois, on constate expérimentalement que, au delà d'une certaine concentration en Aluminium, la réalisation de la fibre pose des problèmes. Notamment des phénomènes de séparation de phase peuvent se produire. De plus, l'élargissement de la largeur du spectre de gain se fait au détriment de la platitude de cette plage de gain utile de l'Erbium.

Typiquement, on a trouvé qu'une concentration en poids d'Aluminium, de l'ordre de 8%, dans le matériau constituant le coeur de la fibre était une limite et permettait d'avoir un saut d'indice de réfraction du coeur de la fibre par rapport à celui de la silice pure de l'ordre de 0,020. Cet écart d'indice doit toutefois être comparé à celui de 0,030 obtenu avec du Germanium comme dopant primaire à la place de l'Aluminium. II en résulte donc qu'une fibre optique avec un coeur dopé avec du Germanium présente un meilleur rendement d'amplification qu'une même fibre optique dopée avec de l'Aluminium. Toutefois, le Germanium n'est pas connu pour produire une augmentation de la largeur utile. D'autre part, on constate qu'expérimentalement, qu'il est difficile de concilier forte concentration en Aluminium et forte concentration en Germanium.

Le but de l'invention est donc de proposer une solution pour améliorer le gain d'amplification d'une fibre optique à usage d'amplificateur optique, et en particulier une fibre optique dont le coeur contient de l'Erbium et est dopé avec de l'Aluminium.

A cet effet, l'invention a pour objet une fibre optique à usage d'amplificateur optique, comprenant un coeur entouré par une gaine, le coeur et la gaine étant constitués d'un matériau à base de silice et l'indice de réfraction de la gaine étant inférieur à celui du coeur, caractérisée en ce que le matériau constituant la gaine est dopé de telle manière que l'écart entre l'indice de réfraction du matériau constituant la gaine et l'indice de réfraction de la silice pure est compris entre -0,003 et -0,010.

Par conséquent, selon l'invention, l'indice de réfraction de la gaine est abaissé par rapport à celui de la silice pure ce qui permet d'augmenter l'écart entre l'indice de réfraction du coeur et l'indice de réfraction de la gaine, ceci contribuant à augmenter le rendement d'amplification. A titre d'exemple, un écart d'indice de l'ordre de -0,007 permet d'augmenter de 5 % le gain d'amplification. On a constaté qu'un écart compris 0 et -0,003 entre l'indice de réfraction de la gaine et celui de la silice pure, n'apporte pas de gain notable sur le rendement du pompage optique. Et au delà de -0,010 on observe une stagnation du rendement de pompage optique.

Plus particulièrement, pour abaisser l'indice de réfraction de la gaine par rapport à celui de la silice pure, on introduit dans le matériau constituant la gaine, du Fluor comme dopant selon une proportion en poids comprise entre 0,6% et 3%. D'autres dopants peuvent être utilisés, par exemple le Bore.

La fibre optique selon l'invention est fabriquée par étirage d'une préforme obtenue par exemple selon une méthode de dépôt en phase vapeur modifiée du type MCVD. Le Fluor est introduit sous forme d'un fluorure gazeux lors du dépôt des couches constitutives de la gaine à l'intérieur d'un tube de silice pure qui est mis en rotation sur un banc de dépôt. L'Erbium et l'Aluminium sont introduits par une technique d'imprégnation (« solution soaking technique »). Du Phosphore peut être utilement introduit dans le coeur de la fibre comme co-dopant de l'Aluminium et/ou de l'Ytterbium peut être introduit dans le coeur de la fibre comme co-dopant de l'Erbium. La présence de Phosphore contribue à améliorer la platitude de gain ou à diminuer les pertes de fond de la fibre. L'Ytterbium contribue à améliorer l'absorption de la pompe dans le cas d'un pompage à 980nm. La présence de Phosphore permet également d'augmenter encore l'efficacité de pompage.

## Revendications

1. Une fibre optique à usage d'amplificateur optique, comprenant un coeur entouré par une gaine, le coeur et la gaine étant constitués d'un matériau à base de silice et l'indice de réfraction de la gaine étant inférieur à celui du coeur, le matériau constituant la gaine étant dopé de telle manière que l'écart entre l'indice de réfraction du matériau constituant la gaine et l'indice de réfraction de la silice pure est compris entre -0,003 et -0,010, **caractérisée en ce que** le matériau constituant la gaine contient du Fluor- comme dopant, dans une proportion en poids comprise entre 0,6% et 3%.

2. La fibre optique selon la revendication 1, dans laquelle le matériau constituant le coeur contient de l'Erbium et de l'Aluminium comme dopant.

3. La fibre optique selon la revendication 2, dans laquelle le matériau constituant le coeur contient du Phosphore comme co-dopant de l'Aluminium et/ou de l'Ytterbium comme co-dopant de l'Erbium.
